# EUROPEAN PATENT SPECIFICATION

(11) **EP 2 224 757 B1**
(45) Date of publication and mention of the grant of the patent: **21.08.2013**
(21) Application number: 09153970.0
(22) Date of filing: 27.02.2009
(51) Int. Cl.: H04W 4/20, H04W 4/02, H04L 29/08

(54) **Communications system providing mobile device advertisements based upon activity history and related methods**
Kommunikationssystem mit mobilen Vorrichtungswerbungen basierend auf dem Aktivitätsverlauf und zugehörige Verfahren
Système de communications fournissant des publicités de dispositif mobile basées sur l'historique de l'activité et procédés correspondants

(43) Date of publication of application: 01.09.2010
(73) Proprietor: Research In Motion Limited, Waterloo, ON N2L 3W8 (CA)
(72) Inventor: Scott, Sherryl Lee Lorraine, Waterloo Ontario N2L 3L3 (CA); Griffin, Jason T.,, Waterloo Ontario N2L 3W8 (CA); Klassen, Gerhard D.,, Waterloo Ontario N2L 5Z5 (CA); Reeve, Scott, Waterloo Ontario N2L 3L3 (CA)
(74) Representative: Roberts, Gwilym Vaughan

(56) References cited:
- WO-A-2008/048738
- US-A1- 2007 088 821
- US-A1- 2007 293 201
- US-A1- 2008 027 801
- US-A1- 2008 034 088

## Description

### Technical Field

The present disclosure relates to the field of communications systems, and, more particularly, to mobile wireless communications systems and related methods.

### Background

Mobile communications systems continue to grow in popularity and have become an integral part of both personal and business communications. Mobile telephones allow users to place and receive voice calls most anywhere they travel. Moreover, as mobile telephone technology has increased, so too has the functionality of mobile devices and the different types of devices available to users. For example, many mobile devices now incorporate personal digital assistant (PDA) features such as calendars, address books, task lists, etc. Moreover, such multi-function devices may also allow users to wirelessly send and receive electronic mail (mail) messages and access the Internet via a cellular network and/or a wireless local area network (MLAN), for example.

As a result, users continue to spend more time using their mobile devices during the course of a day, as opposed to early cellular phones that were used only for phones calls. This has resulted in a significant interest from the advertising community in targeting advertisements to mobile devices. embodiment providing mobile wireless communications device advertising based upon activity history.

FIGS. 2 and 3 are schematic block diagrams illustrating advertisement selection features in various embodiments of the system of FIG. 1.

FIG. 4 is a schematic block diagram illustrating mobile wireless communications device geographical positioning determining techniques that may be used in accordance with the system of FIG. 1.

FIG. 5 is a flow diagram illustrating communications method aspects in accordance with an exemplary embodiment.

FIG. 6 is a schematic block diagram illustrating exemplary components of a mobile wireless communications device that may be used for determining vehicle traffic rate or density, or passing pedestrian traffic density, in accordance with exemplary embodiments.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a communications system is disclosed herein which may include at least one mobile wireless communications device and an advertising server cooperating with the at least one mobile wireless communications device via a wireless communications network. More particularly, the advertising server may be configured to generate an activity history for the at least one wireless communications device including geographical positions at corresponding times of day, and selectively sending advertisements to the at least one Mobile wireless communications device based upon the activity history and a given time of day.

The advertising server may generate the activity history based upon activity within a home geographical region, and if the at least one mobile wireless communications device is outside of the home geographical region then selectively send advertisements relating to historical activities within the home geographical region at the given time of day. More particularly, if the at least one mobile wireless communications device is outside of the home geographical region, then the advertising server may be configured to further determine whether the at least one mobile wireless communications device is in a business geographical location or a vacation geographical location, and further selectively send the advertisements based thereon. By way of example, the advertising server may be configured to selectively send entertainment-related advertisements when the at least one mobile wireless communications device is in the vacation geographical location, and selectively send work-related advertisements when the at least one mobile wireless communications device is in the business geographical location. Further, the advertising server may be configured to selectively send the advertisements also based upon current events at a location of the at least one mobile wireless communications device.

By way of example, the at least one mobile wireless communications device may include a satellite positioning system, and the advertising server may be configured to determine the geographical positions based upon the satellite positioning system. In some embodiments, the at least one mobile wireless communications device may be a cellular device, and the wireless communications network may be a cellular network including a plurality of base stations. As such, the advertising server may be configured to determine the geographical positions based upon a given base station communicating with the cellular device.

A related advertising server may include an activity history module configured to generate an activity history for the at least one wireless communications device including geographical positions at corresponding times of day. The advertising server may further include an advertising module configured to cooperate with the activity history module to selectively send advertisements to the at least one mobile wireless communications device based upon the activity history and a given time of day.

A related communications method may include generating an activity history for at least one wireless communications device including geographical positions thereof at corresponding times of day, and selectively sending advertisements to the at least one mobile wireless communications device based upon the activity history and a given time of day .

A related computer-readable medium is also provided. The computer-readable medium may have computer-executable instruction for causing a computer to perform steps including generating an activity history for at least one wireless communications device including geographical positions thereof at corresponding times of day, and selectively sending advertisements to the at least one mobile wireless communications device based upon the activity history and a given time of day.

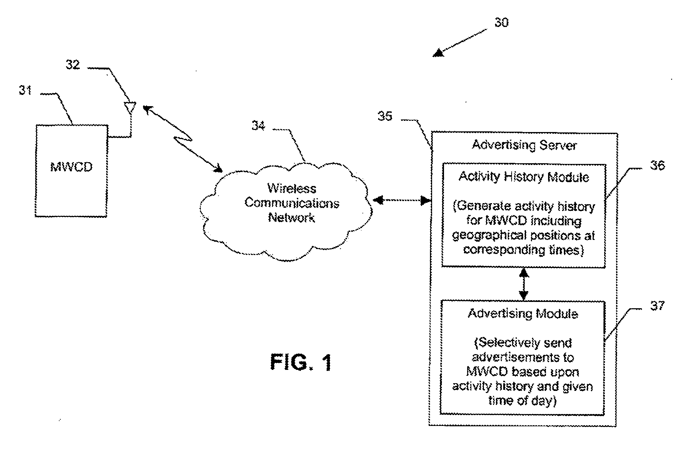

Turning now to FIGS. 1-5, a communications system **30** and associated communications method aspects are first described. The system **30** illustratively includes one or more mobile wireless communications devices **31** (MWCDs) and associated antenna(s) **32,** which may include internal antennas, external antennas, or both. Moreover, the system **30** further illustratively includes a wireless communications network **34,** and an advertising server **35** that communicates with the device **31** via the wireless communications network.

By way of example, the device **31** and wireless communications network **34** may operate in accordance with a cellular, wireless LAN (e.g., 802.11x, Bluetooth, etc.), WiMAX, satellite, etc., communications format, as will be appreciated by those skilled in the art. In some embodiments, more than one such wireless communications format may be used in the same device (e.g., cellular, wireless LAN, and Bluetooth). Various types of mobile wireless communications devices **31** may be used, such as mobile phones, PDAs, laptop computers, wireless-enabled cameras, wireless-enabled media players, etc., for example.

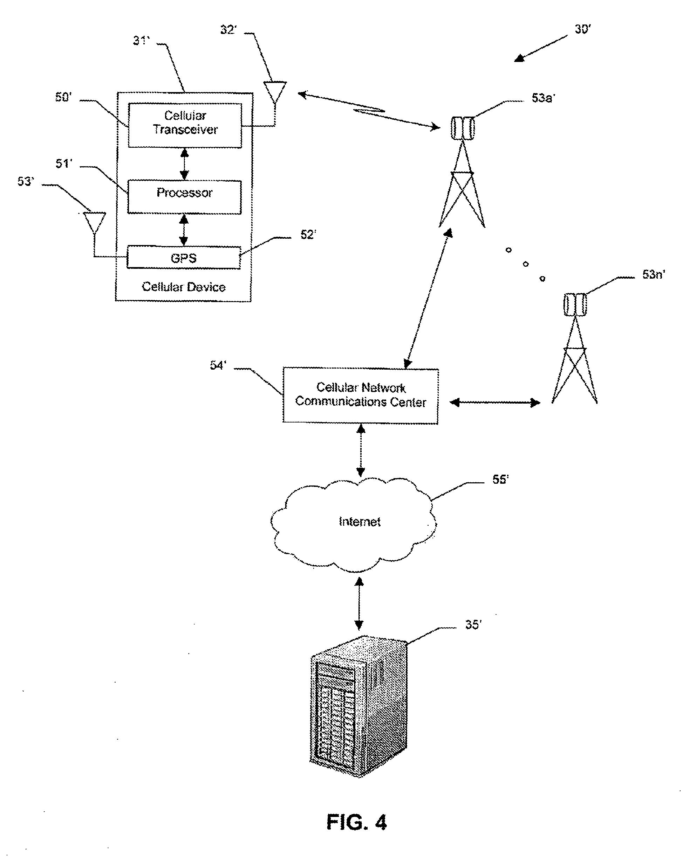

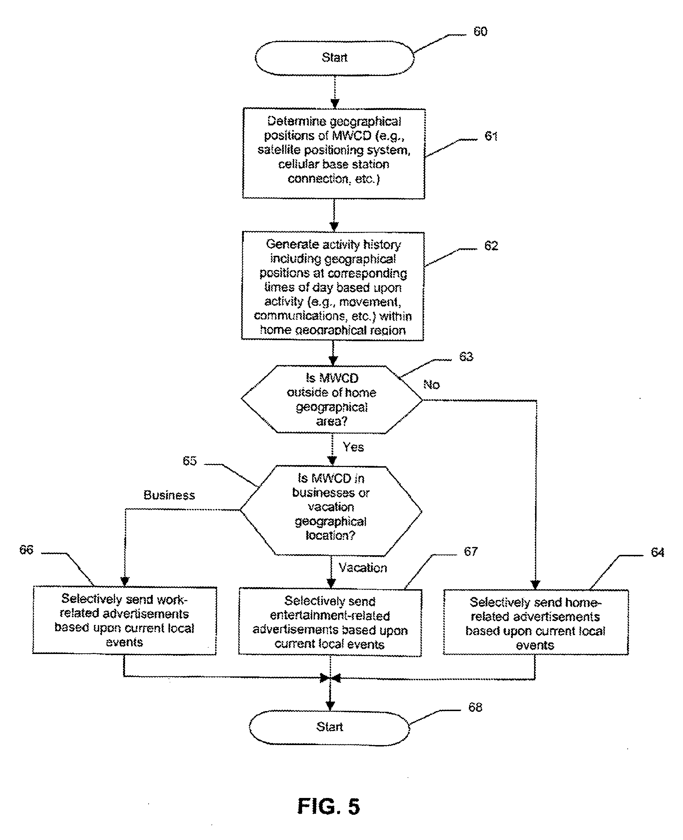

The advertising server **35** illustratively includes an activity history module **36** for generating an activity history for the mobile wireless communications device **31** including geographical positions at corresponding times of day, at Blocks **60-62** (FIG. 5). Determination of the geographical position where the device **31** is located may be accomplished though a variety of techniques. For devices **31** that include a satellite positioning system, such as a global positioning system (GPS) **52'** and accompanying antenna(s) **53'** shown in FIG. 4, position information (e.g., latitude/longitude coordinates, etc.) may be downloaded from the device **31'.** Other suitable positioning systems (e.g., Galileo, GLONASS, Beidou, IRNSS, etc.) may also be used.

More particularly, in the illustrated example the device **31'** is a cellular device including a cellular transceiver **50'** and associated antenna **32',** and a processor or controller **51'** (e.g., a microprocessor and associated memory, computer executable instructions, etc.) illustratively coupled to the transceiver and the GPS **52'.** In such an embodiment, the device **31'** communicates over a cellular communications network which illustratively includes a plurality of cellular base stations **53a'-53n'** (shown as cellular towers in the example of FIG. 4) and a cellular network communications center **54',** which switches telephone calls between the various base stations and a public switched telephone network (PSTN), for example, as will be appreciated by those skilled in the art. Moreover, the cellular network communications center **54'** may also route data, such as electronic mail (mail) data, Internet data, etc., to and from devices **31'** over the Internet **55',** and particularly to and from the advertising server **35'.**

It should be noted that the geographical position information may be determined using other approaches than a satellite positioning system resident on the device **31'.** For example, the position of the device **31'** may be determined based upon the particular base station **53'** communicating with the device, or by triangulation using a plurality of base stations, as will be appreciated by those skilled in the art.

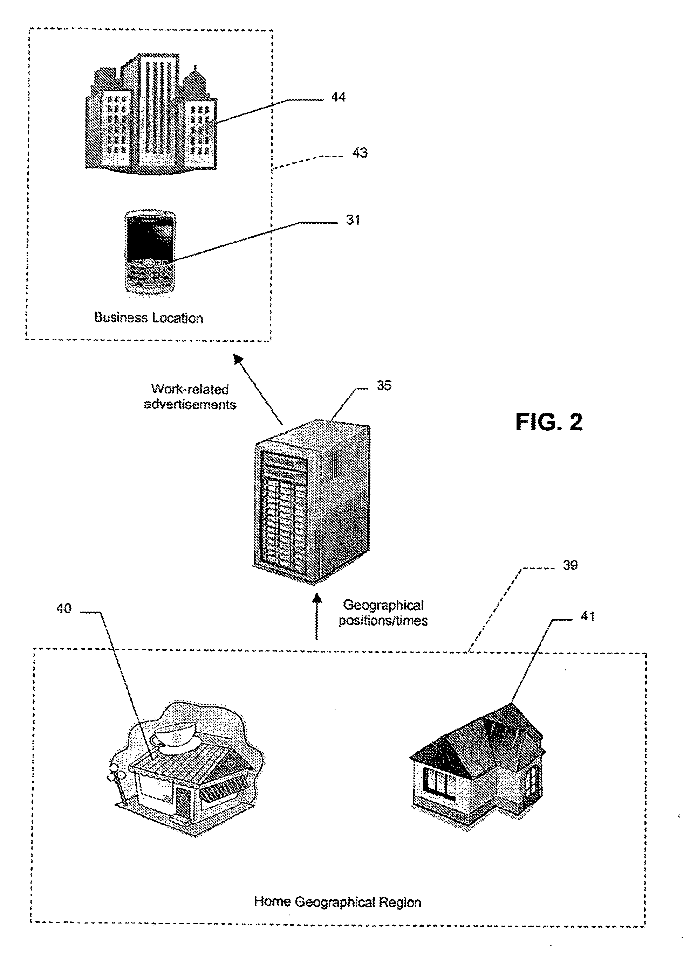

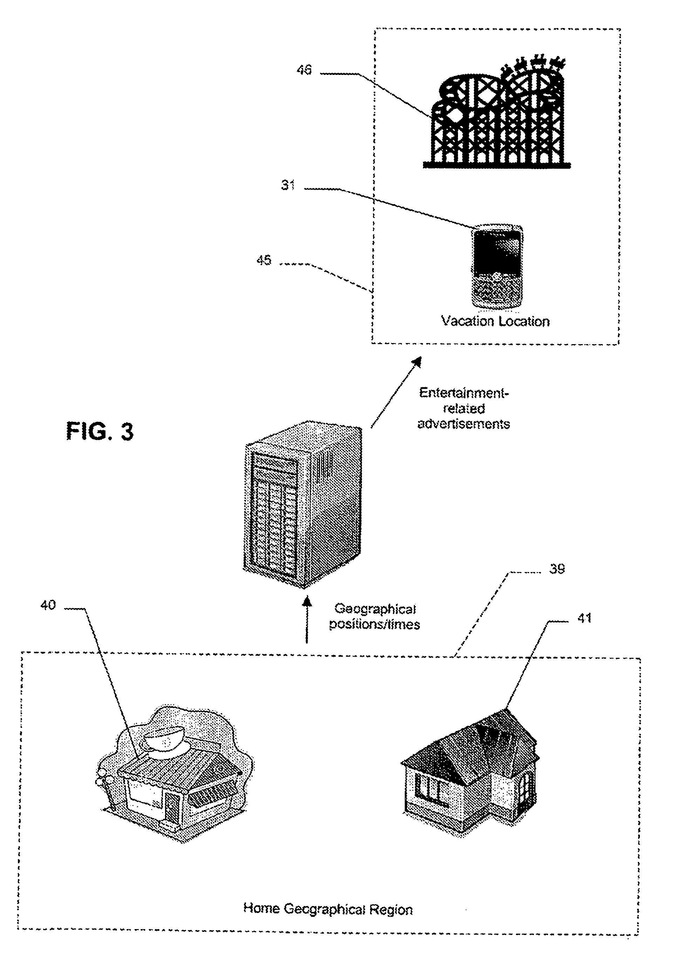

Referring to the example of FIGS. 2 and 3, each mobile wireless communications device **31** may have a home geographical region **39** associated therewith. In the case of a cellular device, for example, the home geographical region 39 may correspond to a home area code assigned to the device (i.e., as part of a device telephone number). The home geographical region **39** need not necessarily be restricted to an area code, and may instead be based upon one or more zip or postal codes, a metropolitan area, county, or based upon an imaginary boundary extending a certain distance from a central location (e.g., the user's house, etc.), as will be appreciated by those skilled in the art . In the illustrated example, the home geographical region **39** includes the user's house **41** and a coffee shop **40,** although numerous other stores, the user's place of work, etc., may also be within the home geographical region as well.

The activity history may be used to determine activities or preferences of device users that the users prefer to engage in or favor at certain times of the day. In the present example, when in the home geographical region **39** the user of the device **31** regularly visits the coffee shop **40.** For example, the user may regularly stop in at the coffee shop **40** on the way to work in the mornings to purchase a cup of coffee, typically between 8:00 am and 8:30 am on weekdays. The activity history module **36** may advantageously cross-reference known coordinates of stores such as the coffee shop **40** to the determined position coordinates of the device **31** to make the association that the user regularly patronizes the coffee shop **40** at this time of the morning. This is but one of many exemplary events or activity patterns that can be included in the activity history for use in determining appropriate advertising content to send to the device **31,** as will be appreciated by those skilled in the art. More generally, activity may refer to or be determined based upon movement of the device **31,** as well as communications (e.g., calls, emails, SMS/MMS messages, etc.) activity, as will be appreciated by those skilled in the art .

In this regard, the advertising server **35** further illustratively includes an advertising module **37** (FIG. 1) that cooperates with the activity history module **36** for selectively sending advertisements to the device **31** based upon the activity history and a given time of day. For example, the advertising module **37** may select coffee advertisements to send to the device **31** on weekdays shortly before 8:00 am, and not send coffee advertisements to the device **31** after 8:30 am because the activity history indicates that the user typically does not come in the store after this time (i.e., because the user is already at work, etc.).

Moreover, the type of advertisement may also be tailored based upon the nature of the user's activity, and whether the user is within the home geographical region **39** or not, at Block **63.** For example, when in the home geographical region **39,** the advertising module **37** may advantageously send home-related advertisements to the device **31,** at Block **64.** For example, since the user frequently visits the coffee shop **40,** the advertisements need not inform the user of the shop's existence or location, but instead may be intended to remind or encourage the user to stop there, such as by relating the flavors or specials of the day.

If the device **31** is found to be outside of the home geographical region **39** by the server **35,** this indicates the user is traveling, and the server may advantageously select advertisement accordingly relating to historical activities within the home geographical region at the given time of day. More particularly, when a user travels it is typically either for business purposes or entertainment/vacation purposes. In the example of FIG. 2, a user is on business travel and has taken her device **31** to a business geographical location **43,** namely a downtown metro area **44.** The activity history module **36** may further recognize a location as a business geographical location because it is located in an office park, an industrial area, etc., as will be appreciate by those skilled in the art. The advertising module **37** may therefore advantageously select and send work-related advertisements when the device **31** is in the business geographical location, at Block **66.**

By way of example, knowing that the user likes to get coffee on the way to work, the advertising module **37** may select and send a coffee-related advertisement(s) to the device **31** around 8:00 am in the morning. However, rather than merely informing the user of the flavor of the day at their usual coffee shop **40,** the advertisement now may indicate the location of, and directions to, a nearby coffee shop to the hotel the user is staying at (i.e., the user's overnight geographical location). In other words, the advertisement is tailored not only to the user's historical preferences for the given time of day, but also to the user's current location. Other business relate advertisements may include restaurant offers for "sit down" business restaurants shortly before the typical time the user goes to lunch, etc. Another example is that if there is a coffee shop similar to the shop **40** the user normally frequents in the user's current location, this may be listed as an option before or after others that may be closer, in case the user prefers familiarity.

On the other hand, if the device **31** is outside of the home geographical region **39** and the activity history module **36** further determines that device is in a vacation geographical location **45** (FIG. 3), then entertainment-related advertisements may advantageously be selected and sent to the device, at Block **67,** thus concluding the method illustrated in FIG. 5 (Block **68**). By way of example, vocation geographical location **45** may include an amusement park **46,** a national park, ski resort, etc. Thus, for example, in the morning before 8:00 am, if the device **31** is in the vicinity of an amusement park, then it may be assumed that the user is travelling with his or her family and may preferably want to go to a diner where other members of the family (e.g., children) can have breakfast, but the user can still have coffee. As such, an advertisement for a nearby diner or breakfast restaurant may be selected and sent shortly before 8:00 am in the morning, with perhaps a "kinds eat free" coupon or other appropriate content.

It should be noted that in some embodiments the device **31** may have an option for user selection of location, such as home, vacation travel, and business travel. For example, the user may be permitted to set a current location through a user interface on a device display using a touch screen, keypad, etc. In such embodiment, the advertising server **35** would advantageously retrieve the current location setting from the device **31** and make the appropriate advertisement selection based thereon, as described above. When selecting "vacation," the user may also be provided with an option for "with children" or "without children," in some embodiments.

Advertisements may be selected in various ways. An advertising service that maintains the advertising server **35,** for example, may solicit advertisements from various stores, merchants, etc., in different geographical locations, and georeference the advertisements to respective geographical positions or the stores, etc. The advertising server **35** therefore has a database of available advertisements to use based upon the given location of a user device **31** at a particular time of day, as well as current events in the given location, for example. Moreover, various techniques may be used for prioritizing the advertisements for sending to the device **31** beyond whether it is intended for users within or outside of their respective home geographical regions **39.** For example, add priority may also be established based upon a bidding system, such that advertisers willing to pay more for an advertisement have their ads sent to devices first, as will be appreciated by those skilled in the art.

A related computer-readable medium is also provided. The computer-readable medium may have computer-executable instructions (or modules) for causing a computer, such as the server **35,** to perform steps including generating an activity history for one or more wireless communications devices **31** including geographical position thereof at corresponding times of day, and selectively sending advertisements to the device(s) based upon the activity history and a given time of day, as discussed further above. The advertising server **35** may include hardware components (e.g., a processor(s), memory, etc.), software components, or both. Moreover, the carious functions of the server **35** descried herein may be' implemented in a single server device, or over a plurality of server devices, which may or may not be remotely located from one another, as will be appreciated by those skilled in the art.

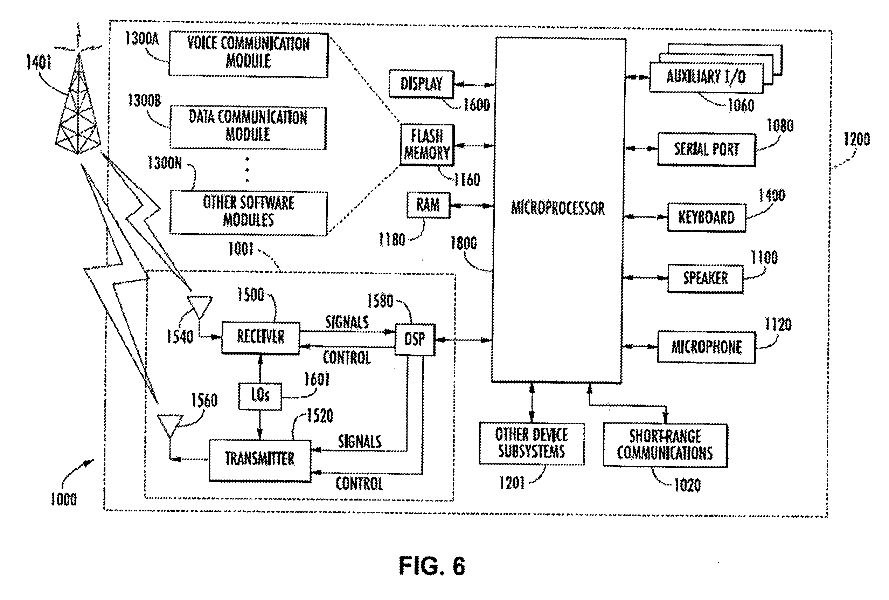

Exemplary components of a mobile wireless communications device **1000** that may be used in accordance with the system **30** are further described in the example below with reference to FIG. 6. The device **1000** illustratively includes a housing **1200,** a keypad **1400** and an output device **1600**. The output device shown is a display **1600,** which may comprise a full graphic LCD. In some embodiments, display **1600** may comprise a touch-sensitive input and output device. Other types of output devices may alternatively be utilized. A processing device **1800** is contained within the housing **1200** and is coupled between the keypad **1400** and the display **1600.** The processing device **1800** controls the operation of the display **1600**, as well as the overall operation of the mobile device **1000,** in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures). The keypad **1400** may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 30, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a. subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed. (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic grain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, track ball, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice Message recording subsystem, may also be implemented on the device **1000.** In addition, the display **1600** may also be utilized in voice communications mode, for example to display the identity of a calling party, the duration of a voice call, or other voice call related information.

The short-range communication subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

One exemplary wireless customer segmentation and marketing system is disclosed in U.S. Patent Pub. No. 2007/0293201. Communications system equipment transmits certain messages to mobile devices of subscribers of the system for the purpose of marketing products and/or services to the subscribers. Depending on the location of the mobile device in a communication system, the system determines whether the subscriber is visiting and out of its home area. If the system determines that the subscriber is a visitor, then depending on the type of visitor the subscriber is determined to be, certain types of marketing and/or advertising information are transmitted to the subscriber. Thus, the system has designated the subscriber to receive marketing and/or advertising information. The advertising and marketing information can be in the form of video (with or without sound), audio, graphics or text. The information may be sent over traffic channels and/or signaling channels. The subscriber will receive the information during an idle period.

WO2008/048738 discloses a system for distribution and display of advertising for devices in a network. US2007/0088821 discloses an advertisement selection and delivery system for selecting advertisements based on profile information and rendering the advertisements as accessible to user operating a network-capable appliance connected to a data-packet-network. US2008/0034088 discloses a system and method for generating user contexts for targeted advertising. US2008/0027801 discloses a method and system for advertisement insertion within an internet protocol television (IPTV) system.

Despite the potential advantages of such approaches, further functionality may be desirable for providing advertisements in mobile wireless device applications.

### Brief Description of the Drawings

FIG. 1 is a schematic block diagram of a communications system in accordance with one exemplary

## Claims

1. A communications system (30) comprising:
at least one mobile wireless communications device (31); and
an advertising server (35) communicating with said at least one mobile wireless communications device via a wireless communications network (34) and configured to
generate an activity history for said at least one wireless communications device including geographical positions at corresponding times of day based upon activity within a home geographical region (39),
selectively send home geographical region advertisements to said at least one mobile wireless communications device based upon the activity history and a given time of day if said at least one mobile wireless communications device is within the home geographical region, and
selectively send advertisements relating to historical activities within the home geographical region at the given time of day and relating to a current geographical location of the at least one mobile wireless communications device if said at least one mobile wireless communications device is outside of the home geographical region.

2. The communications system (30) of Claim 1 wherein if said at least one mobile wireless communications device (31) is outside of the home geographical region (39), then said advertising server (35) further determines whether said at least one mobile wireless communications device is in a business geographical location (43) or a vacation geographical location (45) and further selectively sends the advertisements based thereon.

3. The communications system (30) of Claim 2 wherein said advertising server (35) is configured to selectively send entertainment-related advertisements when said at least one mobile wireless communications device (31) is in the vacation geographical location (45).

4. The communications system (30) of Claim 2 wherein said advertising server (35) is configured to selectively send work-related advertisements when said at least one mobile wireless communications device (31) is in the business geographical location (43).

5. The communications system (30) of Claim 1 wherein said advertising server (35) is configured to selectively send the advertisements also based upon current events at a location of the at least one mobile wireless communications device (31).

6. The communications system (30) of Claim 1 wherein the activity history is based upon movement of said at least one mobile wireless communications device (31).

7. The communications system (30) of Claim 1 wherein the activity history is based upon wireless communications of said at least on mobile wireless communications device (31),

8. The communications system (30) of Claim 1 wherein said at least one mobile wireless communications device (31) comprises a satellite positioning system (52'); and wherein said advertising server (35) is configured to determine the geographical positions based upon the satellite positioning system.

9. An advertising server (35) for communicating with at least one mobile wireless communications device (31) via a wireless communications network (34) and comprising:
an activity history module (35) configured to generate an activity history for the at least one wireless communications device including geographical positions at corresponding times of day based upon activity within a home geographical region (39);
an advertising module (37) configured to cooperate with said activity history module to selectively send geographical region advertisements to the at least one mobile wireless communications device based upon the activity history and a given time of day if the at least one mobile wireless communications device is within the home geographical region; and
the advertising module also configured to selectively send advertisements relating to historical activities within the home geographical region at the given time of day and relating to a current geographical location of the at least one mobile wireless communications device if the at least one mobile wireless communications device is outside of the home geographical region.

10. The advertising server (35) of Claim 9 wherein if the at least one mobile wireless communications device (31) is outside of the home geographical region (39), then said advertising module (37) further determines whether the at least one mobile wireless communications device is in a business geographical location (43) or a vacation geographical locaticn (45), and further selectively sends the advertisements based thereon.

11. The advertising server (35) of Claim 10 wherein said advertising module (37) is configured to selectively send entertainment-related advertisements when the at least one mobile wireless communications device (31) is in the vacation geographical location (45).

12. The advertising server (35) of Claim 9 wherein said advertising module (37) is configured to selectively send work-related advertisements when the at least one mobile wireless communications device (31) is in the business geographical location.

13. A communications method comprising;
generating an activity history for at least one wireless communications device (31) including geographical positions thereof at corresponding times of day based upon activity within a home geographical region (39);
selectively sending geographical region advertisements to the at least one mobile wireless communications device based upon the activity history and a given time of day if the at least one mobile wireless communications device is within the home geographical region; and
selectively sending advertisements relating to historical activities within the home geographical region at the given time of day and relating to a current geographical location of the at least one mobile wireless communications device if the at least one mobile wireless communications device is outside of the home geographical region.

## Patentansprüche

1. Ein Kommunikationssystem (30), das aufweist:
zumindest eine mobile drahtlose Kommunikationsvorrichtung (31); und
einen Werbeanzeigen-Server (35), der mit der zumindest einen mobilen drahtlosen Kommunikationsvorrichtung über ein drahtloses Kommunikationsnetzwerk (34) kommuniziert und konfiguriert ist zum Erzeugen einer Aktivitätshistorie für die zumindest eine drahtlose Kommunikationsvorrichtung mit geographischen Positionen an entsprechenden Tageszeiten basierend auf einer Aktivität in einer geographischen Heimatregion (39),
selektives Senden von Werbeanzeigen der geographischen Heimatregion an die zumindest eine mobile drahtlose Kommunikationsvorrichtung basierend auf der Aktivitätshistorie und einer gegebenen Tageszeit, wenn sich die zumindest eine mobile drahtlose Kommunikationsvorrichtung innerhalb der geographischen Heimatregion befindet, und
selektives Senden von Werbeanzeigen in Bezug auf historische Aktivitäten innerhalb der geographischen Heimatregion an der gegebenen Tageszeit und in Bezug auf eine aktuelle geographische Position der zumindest einen mobilen drahtlosen Kommunikationsvorrichtung, wenn sich die zumindest eine mobile drahtlose Kommunikationsvorrichtung außerhalb der geographischen Heimatregion befindet.

2. Das Kommunikationssystem (30) gemäß Anspruch 1, wobei, wenn sich die zumindest eine mobile drahtlose Kommunikationsvorrichtung (31) außerhalb der geographischen Heimatregion (39) befindet, der Werbeanzeigen-Server (35) weiter bestimmt, ob sich die zumindest eine mobile drahtlose Kommunikationsvorrichtung an einem geographischen Firmen-Standort (43) oder einem geographischen Urlaubs-Standort (45) befindet, und weiter die Werbeanzeigen darauf basierend selektiv sendet.

3. Das Kommunikationssystem (30) gemäß Anspruch 2, wobei der Werbeanzeigen-Server (35) konfiguriert ist zum selektiven Senden von unterhaltungsbezogenen Werbeanzeigen, wenn sich die zumindest eine mobile drahtlose Kommunikationsvorrichtung (31) an dem geographischen Urlaubs-Standort (45) befindet.

4. Das Kommunikationssystem (30) gemäß Anspruch 2, wobei der Werbeanzeigen-Server (35) konfiguriert ist zum selektiven Senden von unternehmensbezogenen Werbeanzeigen, wenn sich die zumindest eine mobile drahtlose Kommunikationsvorrichtung (31) an dem geographischen Firmen-Standort (43) befindet.

5. Das Kommunikationssystem (30) gemäß Anspruch 1, wobei der Werbeanzeigen-Server (35) konfiguriert ist zum selektiven Senden der Werbeanzeigen auch basierend auf aktuellen Ereignissen an einem Standort der zumindest einen mobilen drahtlosen Kommunikationsvorrichtung (31).

6. Das Kommunikationssystem (30) gemäß Anspruch 1, wobei die Aktivitätshistorie auf einer Bewegung der zumindest einen mobilen drahtlosen Kommunikationsvorrichtung (31) basiert.

7. Das Kommunikationssystem (30) gemäß Anspruch 1, wobei die Aktivitätshistorie auf drahtlosen Kommunikationen der zumindest einen mobilen drahtlosen Kommunikationsvorrichtung (31) basiert.

8. Das Kommunikationssystem (30) gemäß Anspruch 1, wobei die zumindest eine mobile drahtlose Kommunikationsvorrichtung (31) ein Satellitenpositionierungssystem (52') aufweist; und wobei der Werbeanzeigen-Server (35) konfiguriert ist zum Bestimmen der geographischen Positionen basierend auf dem Satellitenpositionierungssystem.

9. Ein Werbeanzeigen-Server (35) zum Kommunizieren mit zumindest einer mobilen drahtlosen Kommunikationsvorrichtung (31) über ein drahtloses Kommunikationsnetzwerk (34) und aufweisend:
ein Aktivitätshistorie-Modul (36), das konfiguriert ist zum Erzeugen einer Aktivitätshistorie für die zumindest eine drahtlose Kommunikationsvorrichtung mit geographischen Positionen an entsprechenden Tageszeiten basierend auf einer Aktivität in einer geographischen Heimatregion (39);
ein Werbeanzeigen-Modul (37), das konfiguriert ist zum Zusammenarbeiten mit dem Aktivitätshistorie-Modul zum selektiven Senden von Werbeanzeigen der geographischen Region an die zumindest eine mobile drahtlose Kommunikationsvorrichtung basierend auf der Aktivitätshistorie und einer gegebenen Tageszeit, wenn sich die zumindest eine mobile drahtlose Kommunikationsvorrichtung innerhalb der geographischen Heimatregion befindet; und
das Werbeanzeigen-Modul auch konfiguriert ist zum selektiven Senden von Werbeanzeigen in Bezug auf historische Aktivitäten innerhalb der geographischen Heimatregion an der gegebenen Tageszeit und in Bezug auf eine aktuelle geographische Position der zumindest einen mobilen drahtlosen Kommunikationsvorrichtung, wenn sich die zumindest eine mobile drahtlose Kommunikationsvorrichtung außerhalb der geographischen Heimatregion befindet.

10. Der Werbeanzeigen-Server (35) gemäß Anspruch 9, wobei, wenn sich die zumindest eine mobile drahtlose Kommunikationsvorrichtung (31) außerhalb der geographischen Heimatregion (39) befindet, das Werbeanzeigen-Modul (37) weiter bestimmt, ob sich die zumindest eine mobile drahtlose Kommunikationsvorrichtung an einem geographischen Firmen-Standort (43) oder einem geographischen Urlaubs-Standort (45) befindet, und weiter die Werbeanzeigen darauf basierend selektiv sendet.

11. Der Werbeanzeigen-Server (35) gemäß Anspruch 10, wobei das Werbeanzeigen-Modul (37) konfiguriert ist zum selektiven Senden von unterhaltungsbezogenen Werbeanzeigen, wenn sich die zumindest eine mobile drahtlose Kommunikationsvorrichtung (31) an dem geographischen Urlaubs-Standort (45) befindet.

12. Der Werbeanzeigen-Server (35) gemäß Anspruch 9, wobei das Werbeanzeigen-Modul (37) konfiguriert ist zum selektiven Senden von unternehmensbezogenen Werbeanzeigen, wenn sich die zumindest eine mobile drahtlose Kommunikationsvorrichtung (31) an dem geographischen Firmen-Standort (43) befindet.

13. Kommunikationsverfahren, das aufweist:
Erzeugen einer Aktivitätshistorie für zumindest eine drahtlose Kommunikationsvorrichtung (31) mit deren geographischen Positionen an entsprechenden Tageszeiten basierend auf einer Aktivität in einer geographischen Heimatregion (39);
selektives Senden von Werbeanzeigen der geographischen Region an die zumindest eine mobile drahtlose Kommunikationsvorrichtung basierend auf der Aktivitätshistorie und einer gegebenen Tageszeit, wenn sich die zumindest eine mobile drahtlose Kommunikationsvorrichtung innerhalb der geographischen Heimatregion befindet; und
selektives Senden von Werbeanzeigen in Bezug auf historische Aktivitäten innerhalb der geographischen Heimatregion an der gegebenen Tageszeit und in Bezug auf eine aktuelle geographische Position der zumindest einen mobilen drahtlosen Kommunikationsvorrichtung, wenn sich die zumindest eine mobile drahtlose Kommunikationsvorrichtung außerhalb der geographischen Heimatregion befindet.

## Revendications

1. Système de communication (30) comprenant :
au moins un dispositif mobile de communication sans fil (31) ; et
un serveur de publicité (35) communiquant avec ledit au moins un dispositif mobile de communication sans fil, via un réseau de communication sans fil (34), et configuré pour :
produire un historique des activités pour ledit au moins un dispositif mobile de communication sans fil, comprenant des positions géographiques à des heures correspondantes de la journée, en fonction des activités dans une région géographique d'origine (39) ;
envoyer sélectivement des publicités de la région géographique d'origine audit au moins un dispositif mobile de communication sans fil en fonction de l'historique des activités et d'une heure considérée de la journée, si ledit au moins un dispositif mobile de communication sans fil se situe dans la région géographique d'origine ; et
envoyer sélectivement des publicités intéressant des activités historiques dans la région géographique d'origine à l'heure considérée de la journée et intéressant une position géographique courante dudit au moins un dispositif mobile de communication sans fil si ledit au moins un dispositif mobile de communication sans fil se trouve en dehors de la région géographique d'origine.

2. Système de communication (30) selon la revendication 1, dans lequel, si ledit au moins un dispositif mobile de communication sans fil (31) se situe en dehors de la région géographique d'origine (39), ledit serveur de publicités (35) détermine en outre si ledit au moins un dispositif mobile de communication sans fil se trouve dans une position géographique de travail (43) ou dans une position géographique de vacances (45) et envoie en outre les publicités sélectivement en fonction de cela.

3. Système de communication (30) selon la revendication 2, dans lequel ledit serveur de publicité (35) est configuré pour envoyer sélectivement des publicités intéressant les loisirs lorsque ledit au moins un dispositif mobile de communication sans fil (31) se situe dans la position géographique de vacances (45).

4. Système de communication (30) selon la revendication 2, dans lequel ledit serveur de publicité (35) est configuré pour envoyer sélectivement des publicités intéressant le travail lorsque ledit au moins un dispositif mobile de communication sans fil (31) se situe dans la position géographique de travail (43).

5. Système de communication (30) selon la revendication 1, dans lequel ledit serveur de publicité (35) est configuré pour envoyer sélectivement les publicités également en fonction des événements courants dans une position dudit au moins un dispositif mobile de communication sans fil (31).

6. Système de communication (30) selon la revendication 1, dans lequel l'historique des activités est fondé sur le mouvement dudit au moins un dispositif mobile de communication sans fil (31).

7. Système de communication (30) selon la revendication 1, dans lequel l'historique des activités est fondé sur les communications sans fil dudit au moins un dispositif mobile de communication sans fil (31).

8. Système de communication (30) selon la revendication 1, dans lequel ledit au moins un dispositif mobile de communication sans fil (31) comprend un système de localisation par satellites (52'), et dans lequel ledit serveur de publicité (35) est configuré pour déterminer la position géographique à partir du système de localisation par satellites.

9. Serveur de publicités (35) destiné à communiquer avec au moins un dispositif mobile de communication sans fil (31) via un réseau de communication sans fil (34) et comprenant :
un module d'historique d'activités (36) configuré pour produire un historique des activités pour ledit au moins un dispositif mobile de communication sans fil, comprenant des positions géographiques à des heures correspondantes de la journée, en fonction des activités dans une région géographique d'origine (39) ;
un module de publicité (37) configuré pour coopérer avec ledit module d'historique d'activités pour envoyer sélectivement des publicités de la région géographique audit au moins un dispositif mobile de communication sans fil en fonction de l'historique des activités et d'une heure considérée de la journée, si ledit au moins un dispositif mobile de communication sans fil se situe dans la région géographique d'origine ; et
le module de publicité étant en outre configuré pour envoyer sélectivement des publicités intéressant des activités historiques dans la région géographique d'origine à l'heure considérée de la journée et intéressant une position géographique courante dudit au moins un dispositif mobile de communication sans fil si ledit au moins un dispositif mobile de communication sans fil se trouve en dehors de la région géographique d'origine.

10. Serveur de publicités (35) selon la revendication 9, dans lequel, si ledit au moins un dispositif mobile de communication sans fil (31) se situe en dehors de la région géographique d'origine (39), ledit module de publicité (37) détermine en outre si ledit au moins un dispositif mobile de communication sans fil se trouve dans une position géographique de travail (43) ou dans une position géographique de vacances (45) et envoie en outre les publicités sélectivement en fonction de cela.

11. Serveur de publicités (35) selon la revendication 10, dans lequel ledit module de publicité (37) est configuré pour envoyer sélectivement des publicités intéressant les loisirs lorsque ledit au moins un dispositif mobile de communication sans fil (31) se situe dans la position géographique de vacances (45).

12. Serveur de publicités (35) selon la revendication 9, dans lequel ledit module de publicité (37) est configuré pour envoyer sélectivement des publicités intéressant le travail lorsque ledit au moins un dispositif mobile de communication sans fil (31) se situe dans la position géographique de travail (43).

13. Procédé de communication comprenant les étapes consistant à :
produire un historique des activités pour au moins un dispositif mobile de communication sans fil (31), comprenant des positions géographiques de celui-ci à des heures correspondantes de la journée, en fonction des activités dans une région géographique d'origine (39) ;
envoyer sélectivement des publicités de la région géographique audit au moins un dispositif mobile de communication sans fil en fonction de l'historique des activités et d'une heure considérée de la journée, si ledit au moins un dispositif mobile de communication sans fil se situe dans la région géographique d'origine ; et
envoyer sélectivement des publicités intéressant des activités historiques dans la région géographique d'origine à l'heure considérée de la journée et intéressant une position géographique courante dudit au moins un dispositif mobile de communication sans fil si ledit au moins un dispositif mobile de communication sans fil se trouve en dehors de la région géographique d'origine.
